# EUROPEAN PATENT APPLICATION

(11) **EP 4 524 786 A1**
(43) Date of publication of application: **19.03.2025**
(21) Application number: 24198425.1
(22) Date of filing: 04.09.2024
(51) Int. Cl.: G06F 21/44, G06F 21/32, G06F 21/31

(54) **APPARATUS & METHOD FOR MULTI-DEVICE AUTHENTICATION**

(30) Priority: 18.09.2023 GB 202314196
(71) Applicant: Nokia Technologies Oy, 02610 Espoo (FI)
(72) Inventor: VASILE, Diana-Alexandra, Cambridge (GB); MIN, Chulhong, Cambridge (GB)
(74) Representative: Nokia EPO representatives

(57) **Abstract**

Apparatus comprising means for: receiving a request to authenticate a first device; obtaining information identifying a first set of sensors associated with the first device; obtaining information identifying a second set of sensors associated with a second device; obtaining correlation data indicating correlations between sensors in the first set of sensors and sensors in the second set of sensors; selecting a first sensor from the first set of sensors and a second sensor from the second set of sensors based on the correlation data; and authenticating the first device in response to determining that data from the first sensor is correlated with data from the second sensor.

## Description

### Field

Various example embodiments relate to an apparatus & method suitable for multi-device authentication.

### Background

Wearable devices are increasingly becoming part of everyday life. Some wearable devices (e.g. smart rings) lack functionality such as user interfaces that allow a user to connect and disconnect from a network and/or service. This makes authentication challenging for these types of wearable devices. Furthermore, wearable devices can have security vulnerabilities. For example, a wearable device that is already authenticated with access to a user's network could be lost or stolen. In this case a malicious user could access the user's network through the lost or stolen wearable device.

Biometric signals can be used for authentication. In this case a device authenticates with the network based on the data it measures rather than an explicit indication received from a user.

As the number of wearable devices increases, so does the range of data that can be sensed (or measured) by the devices. Furthermore, wearable devices are also often made by different manufacturers and generate sensed data at different rates. These incompatibilities between wearable devices make it challenging to authenticate using sensed biometric data.

### Summary

According to a first aspect there is provided an apparatus comprising means for: receiving a request to authenticate a first device; obtaining information identifying a first set of sensors associated with the first device; obtaining information identifying a second set of sensors associated with a second device; obtaining correlation data indicating correlations between sensors in the first set of sensors and sensors in the second set of sensors; selecting a first sensor from the first set of sensors and a second sensor from the second set of sensors based on the correlation data; and authenticating the first device in response to determining that data from the first sensor is correlated with data from the second sensor.

In an example authenticating the first device comprises adding the first device to a network/service and/or allowing the first device access to a resource/service. In an example, the second device is already part of the network/service and/or allowed access to the resource/service.

In an example, the apparatus further comprises means for obtaining data from the first sensor and data from the second sensor in response to determining that the second sensor is correlated with the first sensor.

In an example, the information identifying the first set of sensors comprises an indication of the characteristic/property measured by sensors in the first set of sensors.

In an example, the first device comprises the first sensor.

In an example, the first set of sensors comprises one or more sensors.

In an example, the first device and the second device are worn by the same user.

In an example, authenticating the first device comprises: determining that the first device is worn or in the presence of the same user as the second device; and obtaining access to a resource or service associated with the user.

In an example the apparatus further comprises means for: generating correlation data by learning correlations between the first set of sensors and the second set of sensors.

In an example the correlation data is generated before receiving the request to authenticate the first device.

In an example learning correlations between the first set of sensors and the second set of sensors comprises: receiving first data for a first time period from the first sensor; receiving second data for the first time period from the second sensor; determining a correlation between the first sensor and the second sensor based on the first data and the second data.

In an example the first data is associated with the first device and the second data is associated with the second device.

In an example learning correlations between the first set of sensors and the second set of sensors further comprises at least one of: resampling the first data and/or resampling the second data to a common sampling rate.

In an example learning correlations between the first set of sensors and the second set of sensors further comprises: reducing a dimensionality of the first data and/or the second data to a common dimensionality.

In an example a common dimension is a single dimension (i.e. 1D) i.e. a scalar value. Optionally, not including the time dimension.

In an example determining the correlation between the first sensor and the second sensor based on the first sensor data and the second sensor data comprises: determining a value of a time synchronous correlation metric between the first sensor data and the second sensor data; and determining that a time synchronous correlation exists between the first sensor and the second sensor in response to determining that the value of the time synchronous correlation metric is greater than a first threshold.

In an example determining the correlation between the first sensor and the second sensor based on the first sensor data and the second sensor data further comprises: in response to determining that the value of the time synchronous correlation metric is less than the first threshold: determining a value of a time asynchronous correlation metric between the first sensor data and the second sensor data.

In an example determining the value of the time asynchronous correlation metric between the first sensor data and the second sensor data comprises: training a machine learning model to predict if at least two input data samples from a training data set are associated with the same user at the same time; determining an accuracy of the machine learning model based on a validation data set; and in response to determining that the accuracy of the machine learning model is greater than a second threshold: determining the value of the time asynchronous correlation metric using the machine learning model, the first sensor data and the second sensor data.

In an example the training data set and the validation data set comprises data from the first sensor and the second sensor.

In an example the machine learning model is configured to generate an output indicating a likelihood that the at least two input data samples are associated with the same person at the same time; and wherein the time asynchronous correlation metric corresponds to the likelihood.

In an example the time synchronous correlation metric comprises a dynamic time warping metric.

In an example the first sensor and the second sensor measure different characteristics.

In an example, the first sensor and the second sensor measure different properties.

In an example, direct comparison of first sensor data and second sensor data is not via an intermediary.

In an example the request to authenticate the first device comprises the information identifying the first set of sensors associated with the first device.

In an example selecting the first sensor from the first set of sensors and the second sensor from the second set of sensors comprises: identifying a combination of sensors from the first set of sensors and the second set of sensors that are associated with a highest correlation metric value in the correlation data.

In an example the highest correlation metric value has the closest correlation (i.e. most closely correlated).

In an example the first set of sensors comprises the first sensor and a third sensor; and wherein identifying a combination of sensors from the first set of sensors and the second set of sensors that are associated with a highest correlation metric value comprises: selecting the first sensor from the first set of sensors in response to determining that a first value of a correlation metric between the first sensor and the second sensor is greater than a second value of the correlation metric between the third sensor and the second sensor.

In an example the second set of sensors comprises the second sensor and a fourth sensor; and wherein identifying a combination of sensors from the first set of sensors and the second set of sensors that are associated with a highest correlation metric value comprises: selecting the first sensor from the first set of sensors and the second set of sensors in response to determining that a first value of a correlation metric between the first sensor and the second sensor is greater than: a second value of the correlation metric between the third sensor and the second sensor; a third value of the correlation metric between the third sensor and the fourth sensor; and a fourth value of a correlation metric between the first sensor and the fourth sensor.

In an example the second device is already authenticated.

In an example the second device has been authenticated before receiving the request to authenticate the first device.

In an example the second device being authenticated comprises determining that the second device is associated with the user. Optionally, determining that the second device is monitoring the user.

In an example the correlation data comprises information indicating a type of correlation between the first sensor and the second sensor, and a first value of the correlation metric between the first sensor and the second sensor; and wherein determining that the data from the first sensor is correlated with data from the second sensor comprises: identifying the type of correlation between the first sensor and the second sensor; calculating a second value of the correlation metric between the first sensor and the second sensor based on the type of correlation; and determining that the data from the first sensor is correlation with data from the second sensor in response to determining that the second value of the correlation metric is within a third threshold of the first value of the correlation metric.

In an example being within the second threshold includes +/- a predetermined value of the first value.

In an example the type of correlation comprises a time synchronous correlation or a time asynchronous correlation.

In an example the apparatus further comprises means for: delaying a period of time after authenticating the first device; obtaining information identifying a third set of sensors associated with the first device; obtaining information identifying a fourth set of sensors associated with a second device that is authenticated; obtaining correlation data indicating correlations between sensors in the third set of sensors and sensors in the fourth set of sensors; selecting a fifth sensor from the first third set of sensors and a sixth sensor from the fourth set of sensors based on the correlation data; and authenticating the first device in response to determining that data from the fifth sensor is correlated with data from the sixth sensor.

In an example the first set of sensors and third set of sensors comprise different sensors (e.g. due to a sensor being de-activated)

According to a second aspect there is provided an apparatus comprising; at least one processor; and at least one memory storing instructions that, when executed by the at least one processor cause the apparatus at least to: receive a request to authenticate a first device; obtain information identifying a first set of sensors associated with the first device; obtain information identifying a second set of sensors associated with a second device; obtain correlation data indicating correlations between sensors in the first set of sensors and sensors in the second set of sensors; select a first sensor from the first set of sensors and a second sensor from the second set of sensors based on the correlation data; and authenticate the first device in response to determining that data from the first sensor is correlated with data from the second sensor.

According to a third aspect there is provided a method comprising: receiving a request to authenticate a first device; obtaining information identifying a first set of sensors associated with the first device; obtaining information identifying a second set of sensors associated with a second device; obtaining correlation data indicating correlations between sensors in the first set of sensors and sensors in the second set of sensors; selecting a first sensor from the first set of sensors and a second sensor from the second set of sensors based on the correlation data; and authenticating the first device in response to determining that data from the first sensor is correlated with data from the second sensor.

In an example the method is computer implemented

In an example the method further comprises generating correlation data by learning correlations between the first set of sensors and the second set of sensors.

In an example learning correlations between the first set of sensors and the second set of sensors comprises: receiving first data for a first time period from the first sensor; receiving second data for the first time period from the second sensor; determining a correlation between the first sensor and the second sensor based on the first data and the second data.

In an example learning correlations between the first set of sensors and the second set of sensors further comprises at least one of: resampling the first data and/or resampling the second data to a common sampling rate.

In an example learning correlations between the first set of sensors and the second set of sensors further comprises: reducing a dimensionality of the first data and/or the second data to a common dimensionality.

In an example determining the correlation between the first sensor and the second sensor based on the first sensor data and the second sensor data comprises: determining a value of a time synchronous correlation metric between the first sensor data and the second sensor data; and determining that a time synchronous correlation exists between the first sensor and the second sensor in response to determining that the value of the time synchronous correlation metric is greater than a first threshold.

In an example determining the correlation between the first sensor and the second sensor based on the first sensor data and the second sensor data further comprises: in response to determining that the value of the time synchronous correlation metric is less than the first threshold: determining a value of a time asynchronous correlation metric between the first sensor data and the second sensor data.

In an example determining the value of the time asynchronous correlation metric between the first sensor data and the second sensor data comprises: training a machine learning model to predict if at least two input data samples from a training data set are associated with the same user at the same time; determining an accuracy of the machine learning model based on a validation data set; and in response to determining that the accuracy of the machine learning model is greater than a second threshold: determining the value of the time asynchronous correlation metric using the machine learning model, the first sensor data and the second sensor data.

In an example the training data set and the validation data set comprises data from the first sensor and the second sensor.

In an example the machine learning model is configured to generate an output indicating a likelihood that the at least two input data samples are associated with the same person at the same time; and wherein the time asynchronous correlation metric corresponds to the likelihood.

In an example the time synchronous correlation metric comprises a dynamic time warping metric.

In an example the first sensor and the second sensor measure different characteristics.

In an example the request to authenticate the first device comprises the information identifying the first set of sensors associated with the first device.

In an example selecting the first sensor from the first set of sensors and the second sensor from the second set of sensors comprises: identifying a combination of sensors from the first set of sensors and the second set of sensors that are associated with a highest correlation metric value in the correlation data.

In an example the first set of sensors comprises the first sensor and a third sensor; and wherein identifying a combination of sensors from the first set of sensors and the second set of sensors that are associated with a highest correlation metric value comprises: selecting the first sensor from the first set of sensors in response to determining that a first value of a correlation metric between the first sensor and the second sensor is greater than a second value of the correlation metric between the third sensor and the second sensor.

In an example the second set of sensors comprises the second sensor and a fourth sensor; and wherein identifying a combination of sensors from the first set of sensors and the second set of sensors that are associated with a highest correlation metric value comprises: selecting the first sensor from the first set of sensors and the second set of sensors in response to determining that a first value of a correlation metric between the first sensor and the second sensor is greater than: a second value of the correlation metric between the third sensor and the second sensor; a third value of the correlation metric between the third sensor and the fourth sensor; and a fourth value of a correlation metric between the first sensor and the fourth sensor.

In an example the second device is already authenticated.

In an example the correlation data comprises information indicating a type of correlation between the first sensor and the second sensor, and a first value of the correlation metric between the first sensor and the second sensor; and wherein determining that the data from the first sensor is correlated with data from the second sensor comprises: identifying the type of correlation between the first sensor and the second sensor; calculating a second value of the correlation metric between the first sensor and the second sensor based on the type of correlation; and determining that the data from the first sensor is correlation with data from the second sensor in response to determining that the second value of the correlation metric is within a third threshold of the first value of the correlation metric.

In an example the method further comprises: delaying a period of time after authenticating the first device; obtaining information identifying a third set of sensors associated with the first device; obtaining information identifying a fourth set of sensors associated with a second device that is authenticated; obtaining correlation data indicating correlations between sensors in the third set of sensors and sensors in the fourth set of sensors; selecting a fifth sensor from the first third set of sensors and a sixth sensor from the fourth set of sensors based on the correlation data; and authenticating the first device in response to determining that data from the fifth sensor is correlated with data from the sixth sensor.

According to a fourth aspect there is provided a computer program comprising instructions which, when executed by an apparatus, cause the apparatus to perform at least the following: receiving a request to authenticate a first device; obtaining information identifying a first set of sensors associated with the first device; obtaining information identifying a second set of sensors associated with a second device; obtaining correlation data indicating correlations between sensors in the first set of sensors and sensors in the second set of sensors; selecting a first sensor from the first set of sensors and a second sensor from the second set of sensors based on the correlation data; and authenticating the first device in response to determining that data from the first sensor is correlated with data from the second sensor.

According to a fifth aspect there is provided a computer program comprising instructions which, when executed by an apparatus, cause the apparatus at least to: receive a request to authenticate a first device; obtain information identifying a first set of sensors associated with the first device; obtain information identifying a second set of sensors associated with a second device; obtain correlation data indicating correlations between sensors in the first set of sensors and sensors in the second set of sensors; select a first sensor from the first set of sensors and a second sensor from the second set of sensors based on the correlation data; and authenticate the first device in response to determining that data from the first sensor is correlated with data from the second sensor.

### Brief Description of the Drawings

Some examples will now be described with reference to the accompanying drawings in which:
Fig. 1 shows a first system 100 according to an example;
Fig. 2 shows a method for performing multi-device authentication according to a first example;
Fig. 3 shows a method of correlation training according to an example;
Fig. 4A shows a method of obtaining sensor data according to an example;
Fig. 4B shows a method of pre-processing sensor data according to an example;
Fig. 4C shows a method for determining a correlation between sensor data according to an example;
Fig. 4D shows a graphical representation of two correlated signals according to an example;
Fig. 4E shows a graphic representation of two uncorrelated signals according to an example;
Fig. 4F shows a machine learning model according to an example;
Fig. 4G shows a method of training the machine learning model 480 according to an example;
Fig. 4H shows a graphical representation of two time asynchronous correlated signals according to an example;
Fig. 4I shows a graphical representation of two uncorrelated signals according to an example;
Fig. 4J shows correlation data according to an example;
Fig. 4K shows a method of performing correlation training according to a second example;
Fig. 5 shows a method of authenticating a device according to an example;
Fig. 6A shows a first use of the authentication method according to an example;
Fig. 6B shows a second use of the authentication method according to an example;
Fig. 6C shows a third use of the authentication method according to an example;
Fig. 7A shows an exemplary system for a fourth use of the authentication method according to an example;
Fig. 7B shows the fourth use of the authentication method according to an example;
Fig. 8A shows a second system 800 according to an example;
Fig. 8B shows a third system 850 according to an example;
Fig. 9 shows an implementation of the first apparatus 106 according to an example.

In the figures same reference numerals denote same functionality/components.

### Detailed Description

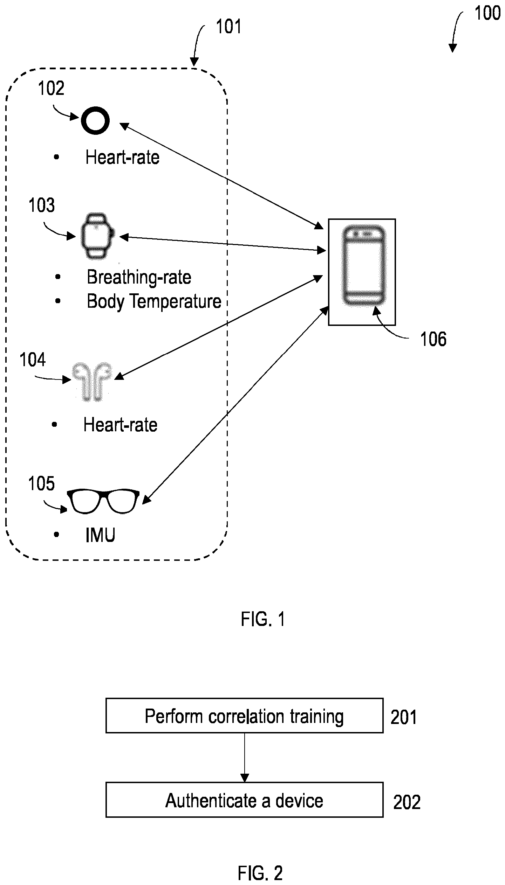

Fig. 1 shows a first system 100 according to an example. The first system 100 comprises a set of devices 101. The set of devices 101 comprises at least one device. In an example, the set of devices 101 comprises a plurality of devices. In an example, one or more devices in the set of devices 101 are wearable devices (i.e., configured to be worn by a human user). In the example of Fig. 1, the set of devices 101 comprises a first device 102, a second device 103, a third device 104 and a fourth device 105.

In the specific example of Fig. 1, the first device 102 is a smart ring, the second device 103 is a smart watch, the third device 104 is at least one smart ear bud and the fourth device 105 is a pair of smart glasses.

Each device in the set of devices 101 is configured to monitor at least one characteristic/property of the user. Each device in the set of devices 101 comprises at least one sensor. In an example the at least one sensor includes a biometric sensor that is configured to measure a biological condition of a user.

In the example of Fig. 1 the first device 102 comprises a heart-rate monitor, the second device 103 comprises a breathing-rate monitor and a body temperature monitor, the third device 104 comprises a heart rate monitor, and the fourth device 105 comprises an Inertial Measurement Unit (IMU). In an example the Inertial Measurement Unit (IMU) is configured to measure an acceleration and/or an angular velocity and/or a magnetic field experienced by the device containing the IMU sensor (e.g., the fourth device 105).

The first system 100 also comprises a first apparatus 106. In Fig. 1, the first apparatus 106 is a smartphone. In the first system 100 each device in the set of devices 101 is configured to communicate with the first apparatus 106. In an example, the devices in the set of devices 101 are configured to communicate wirelessly, optionally using Bluetooth^{®}, with the first apparatus 106. In the examples described herein the first apparatus 106 controls access to a network and/or service.

In one approach, in order to gain access to the network and/or service each device from the set of devices 101 transmits an authentication request to the first apparatus 106. A user of the first apparatus 106 approves or rejects the authentication request (e.g., by inputting a response into a user interface/display of the first apparatus 106). In response to the authentication request being approved the requesting device is granted access to the network and/or service. In an example, being granted access to the network and/or service permits the authenticated device to share (e.g. transmit to and/or receive form) data with the first apparatus 106. This approach to authentication can be insecure. For example, with this approach the device may continue to be authenticated for a long time period even if the device is being used/worn by a different user, potentially causing a security vulnerability. In another situation, the first apparatus 106 may not include a user interface through which the user can approve an authentication request. Consequently, the requesting device cannot be authenticated and granted access to the network and/or service using this approach.

As the number of wearable devices increases, so do the sensing capabilities. It is possible that a user may want to authenticate a device with different sensing capabilities (i.e. that measure different properties/characteristics) to those devices that are already authenticated. The description below describes techniques for performing multi-device authentication. Advantageously, the techniques described herein enable device authentication to be achieved without requiring explicit user input even where the devices contain different sensing capabilities.

Fig. 2 shows a method for performing multi-device authentication according to a first example. The method begins in step 201 by performing correlation training. The specific steps that are performed as part of correlation training will be discussed in more detail below. However, in summary, performing correlation training comprises determining the correlations that exist between the sensors of the devices in the set of devices 101 for the specific user wearing those devices. In this step it is determined whether, and to what extent, a correlation exists between the sensors of the different devices. After performing the correlation training phase, the method proceeds to step 202.

In step 202 at least one device is authenticated. The specific steps that are performed as part of the authentication phase will be discussed in more detail below. However, in one example, when authenticating a device, a pair of sensor measurements are selected, one sensor measurement being from the device requesting to be authenticated and the other sensor measurement being from an already authenticated device. The correlation between the pair of sensor measurements is determined and compared to the values determined during the correlation training phase (i.e. step 201). The device is subsequently authenticated (e.g. enabling the requesting device to access the network/service) if the correlation is within limits of the correlation identified during the correlation training phase. This makes the authentication determination user-specific because it is based on the data obtained for the specific user during the correlation training phase.

The correlation training phase will now be discussed in detail below before discussing the authentication phase is in detail.

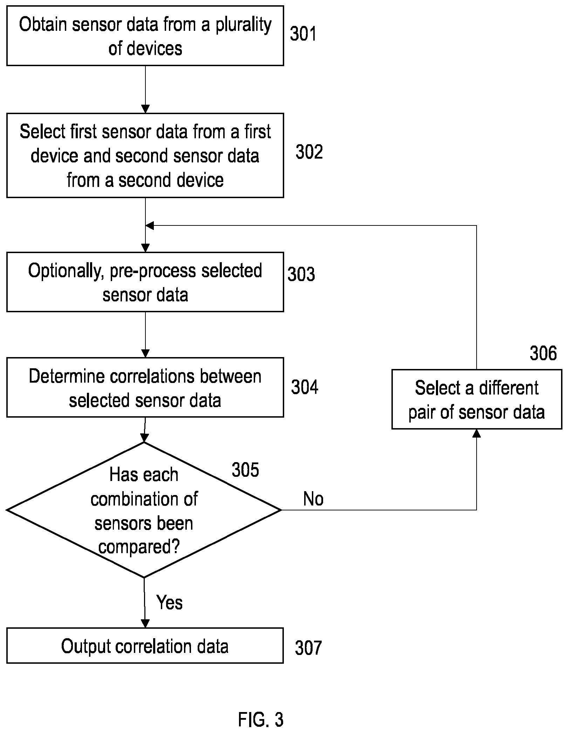

Fig. 3 shows a method of correlation training according to an example. In following example, the steps of Fig. 3 are performed on the first apparatus 106 (i.e. the device that is nominally responsible for authenticating devices and controlling access to the network/service). However, as will be discussed in more detail later in the description, there are provided other examples where the processing of sensor data to identify correlations is performed elsewhere (e.g. on a device in the set of devices 101 or on a remote server).

The method begins in step 301. In step 301 sensor data is obtained from a plurality of devices in the set of devices 101. In one example sensor data is obtained from at least two of: the first device 102, the second device 103, the third device 103 and/or the fourth device 105. In an example sensor data includes measurements obtained by at least one sensor associated with the device.

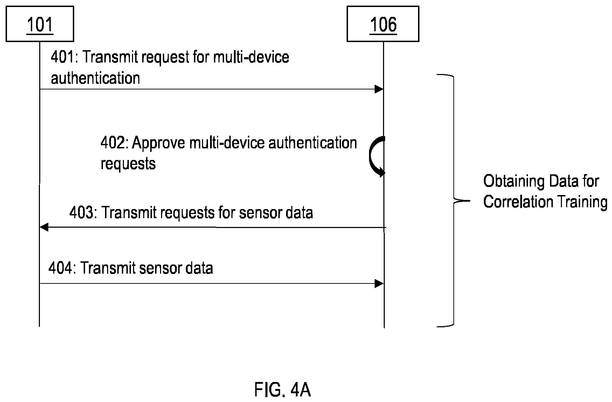

Fig. 4A shows a method of obtaining sensor data according to an example. In step 401 the set of devices 101 transmit a request for multi-device authentication (i.e. one or more devices in the set of devices 101 transmit a request for multi-device authentication to the first apparatus 106). In an example, the requests are transmitted from the one or more devices in the set of devices 101 after a user has started wearing the devices (e.g. by positioning the devices in the proximity of, or in contact with, the user) such that the devices can measure sensor data specific to the user (e.g. the user's biometric signals and/or the user's movement).

The method proceeds to step 402. In step 402 the user approves the authentication requests at the first apparatus 106 (e.g. by providing an input to a Graphical User Interface of the first apparatus 106). In this step the user confirms that the various devices are connected to the user, thereby confirming that the data from the sensor of the devices represents the data of the specific user. The method proceeds to step 403. In response to approving the authentication request in step 402, the first apparatus 106 transmits a request for sensor data from the devices in the set of devices 101. In an example, the first apparatus 106 transmits a request for sensor data from all active devices in the set of devices 101 (including, but not limited to, the device that initiated the multi-device authentication request in step 401).

The method proceeds to step 404. In step 404 each active device in the set of devices 101 transmits sensor data to the first apparatus 106. The sensor data transmitted by each device comprises measurements of a property associated with the user for a (same) time period. In an example the period of time is predetermined (e.g. 20 minutes or 2 hours).

For example, in the example system of Fig. 1 the sensor readings from the first device 102 include the heart rate of the user for the period of time, the sensor readings from the second device 103 include the breathing rate and the body temperature of the user for the period of time, the sensor readings from the third device 104 include the heart rate of the user for the period of time and the sensor readings from the fourth device 105 include IMU data for the period of time.

As will be appreciated more fully from the description below, by analysing the sensor data from the different devices it is possible to identify user-specific correlations in the sensor data from the devices. These use-specific correlations can subsequently be used for authentication (e.g. after confirming that the devices are being worn by the same user and so should have access to the network/service).

In another example, steps 401 and 402 of Fig. 4A are replaced by the user of the first apparatus 106 identifying nearby devices and selecting the devices that are currently sensing the user. After selecting the devices that are monitoring the user, the request for sensor data is transmitted in step 403 to the selected devices and the sensor data is communicated from the set of sensors 101 to the first apparatus 106 in step 404.

Returning to Fig. 3. After obtaining sensor data from a plurality of devices in step 301, the method proceeds to step 302.

In step 302 a first sensor is selected from a first device and a second sensor is selected from a second device. In the example method of Fig. 3 the sensor measurements from different devices are compared pairwise, consequently in the example of Fig. 3 two sets of sensor data are obtained. However, it will be appreciated that step 302, more generally, comprises selecting sensor data from a plurality of sensors (each sensor from a different device) that are to form the basis of the correlation determination.

In an illustrative example, the first sensor data selected in step 302 is the heart rate measured by the first device 102 and the second sensor data selected in step 302 is the breathing rate measured by the second device 103.

After obtaining the first sensor data and the second sensor data the method proceeds to step 303. Step 303 is an optional step and comprises pre-processing the selected sensor data. In an example the sensor measurements from the selected pair of sensors have different dimensions and have different sampling rates. Consequently, in step 303 the data from the pair of sensors is pre-processed so that the data has same dimensions and/or the same (or similar) sampling rate. Advantageously, pre-processing sensor data in this way enables the method to be used with a wide range of devices measuring different properties and having different sample rates.

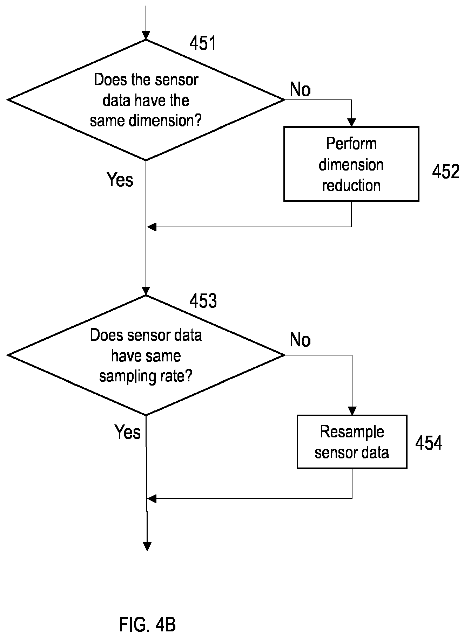

Fig. 4B shows a method of pre-processing sensor data according to an example. After obtaining the first sensor data and the second sensor data (in step 302) the method proceeds to step 451. In step 451 it is determined whether the first sensor data and the second sensor data have the same dimensions.

For example, both the heart rate and the breathing rate are scalar quantities (i.e., only have a magnitude - ignoring the time component), consequently the heart rate and the breathing rate have the same dimensions (i.e. determination in step 451 = "YES"). In contrast, IMU data is a vector quantity (i.e., has a magnitude and a direction). In some examples IMU data has 6 or 9 dimensions. Consequently, if the first sensor data is IMU data and the second sensor data is heart rate data then the selected data from the sensors do not have the same dimensions (i.e., determination in step 451 = "NO").

If it is determined in step 451 that the sources of sensor data have the same dimension, then the method proceeds to step 453. If it is determined in step 451 that the sources of sensor data do not have the same dimension, then the method proceeds to step 452.

In step 452 the dimensions of at least one of the sources of sensor data is reduced. In an example the dimensions of the sensor data are reduced using any one of Principal Component Analysis (PCA) or Linear Discriminant Analysis (LDA).

In a specific example step 451 comprises determining whether both sources of sensor data are scalar quantities. In this specific example dimension reduction is performed in step 452 on each source of sensor data that is not a scalar quantity.

The method proceeds to step 453 after performing dimensionality reduction in step 452, or in response to determining that the sources of sensor data have the same dimensions in step 451.

In step 453 it is determined whether the sources of sensor data (i.e. the first sensor data and the second sensor data) have the same sampling rate (i.e. whether the time between the data samples is the same). The method proceeds to step 454 in response to determining that the fist sensor data and the second sensor data have different sampling rates.

In step 454 the first sensor data and/or the second sensor data are resampled to a common (same) sampling rate. In a specific example the first and/or second sensor data are down sampled by averaging data values obtained during a time period such that a given time period is associated with a single sample (e.g. 1 data sample every minute).

In a further example, step 454 comprises down sampling the sensor data with the higher sampling rate to match the sampling rate of the sensor data with the lower sampling rate. After resampling the sensor data in step 454 the pre-processing of the data is complete and the method proceeds to step 304 of Fig. 3. If it was determined in step 453 that sensor data samples have the same sampling rate, then the pre-processing is complete and the method proceeds to step 304 of Fig. 3. In further example a positive determination (i.e. sensor data have same sampling rates) is made if the sampling rates are within a threshold of each other (i.e. similar but not exactly the same).

Returning to Fig. 3. After (optionally) pre-processing the selected sensor data the method proceeds to step 304. In step 304 the correlation between the selected sensor data is determined. In an example, determining the correlation between the sensor data comprises determining whether a temporal relationship exists between the sources of sensor data and then determining an extent of the correlation using an appropriate technique.

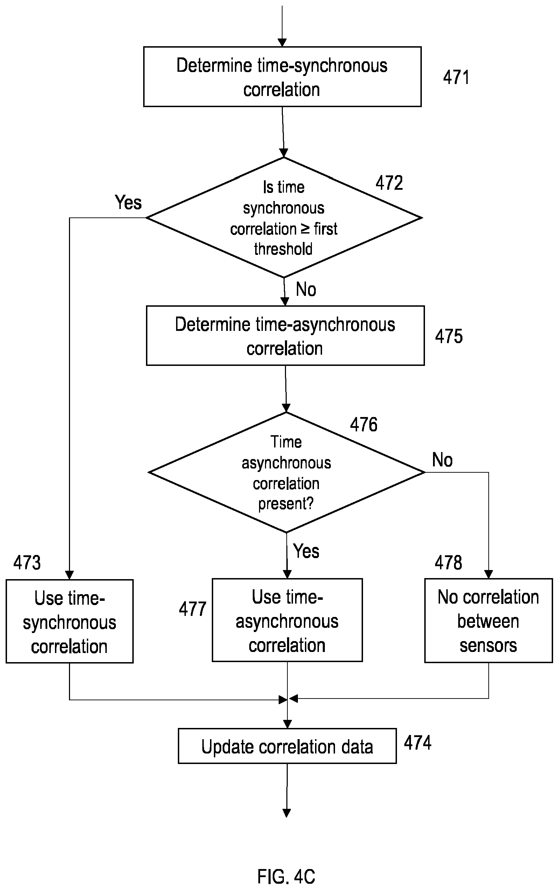

Fig. 4C shows a method for determining a correlation between sensor data according to an example. The method begins in step 471 (e.g., after pre-processing the sensor data in step 303). In step 471 the time synchronous correlation value is determined. In an example, the time-synchronous correlation is a correlation value calculated without time-shifting either of the input data samples before determining the correlation value. Or put in other words, determining the time-synchronous correlation includes determining a correlation metric based on the input time samples without modifying the data samples before applying the correlation technique. A time synchronous correlation value is a correlation metric determined by comparing time samples at the same/similar times.

In an example the correlation between the sensor data is determined using a distance function including, but not limited to, Euclidean distance or Dynamic Time Warping (DTW). In other examples the time synchronous correlation is determined using a similarity function including, but not limited to, Cosine Similarity and Jaccard Similarity.

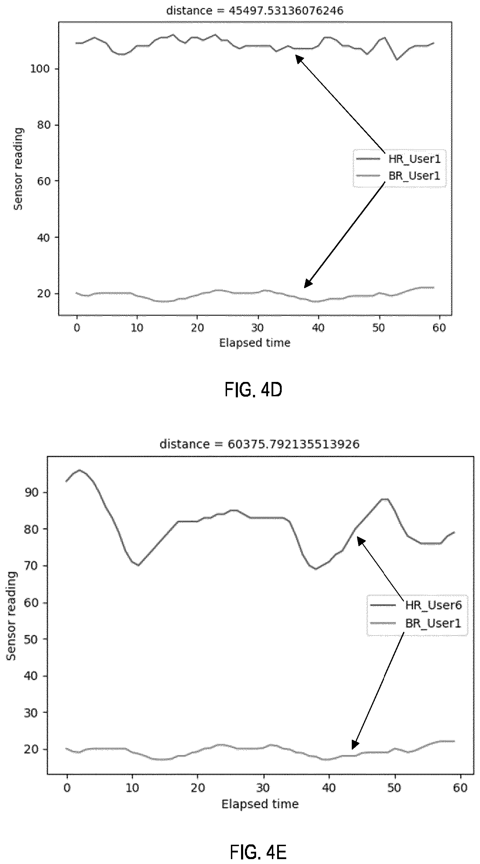

Fig. 4D shows a graphical representation of two correlated signals according to an example. In particular Fig. 4D shows a heart rate of a user measured by a wristband worn by the user and a breathing rate of the same user measured by a bioharness. As can be seen in Fig. 4D, the heart rate and breathing rate of the user are correlated in time (i.e. display a time synchronous correlation). In this example the Dynamic Time Warping distance between the two signals is 45497.

Fig. 4E shows a graphic representation of two uncorrelated signals according to an example. In particular Fig. 4E shows a heart rate of a user (user 6) measured by a wristband worn by the user and a breathing rate of a different user (user 1) measured by a bioharness worn by the different user. As can be seen from Fig. 4E, the heart rate and breathing rate of the different users are uncorrelated in time (i.e. do not display a time synchronous correlation). In this example, the Dynamic Time Warping (DTW) distance between the two signals is 60375. As will be appreciated, the DTW distance of the uncorrelated signals is greater than the DTW distance of the correlated signals.

Returning to Fig. 4C. After determining a value for the time-synchronous correlation in step 471 the method proceeds to step 472. In step 472 it is determined whether the value of the time synchronous correlation is greater than or equal to a first threshold value. In an example, the first threshold value is predetermined.

If it is determined in step 472 that the time synchronous correlation is greater than or equal to the first threshold, the method proceeds to step 473 where it is recorded that there exists a time-synchronous correlation between the sensor data being compared. The method subsequently proceeds to step 474 where the correlation data is updated to show a time synchronous correlation exists between the two signals being compared. In addition, the correlation data is also updated to record the value of the correlation metric.

Example correlation data showing the data recorded during the training phase will be discussed in more detail below. Furthermore, as will be discussed in more detail later in the description, the value of the correlation is subsequently used during an authentication phase to determine whether the signals are from the same user as the data was obtained from in the training phase. After updating the correlation data in step 474, the method returns to Fig. 3 and proceeds to step 305.

Continuing with the method of Fig. 4C. If it is determined in step 472 that the time synchronous correlation is less than the first threshold, the method proceeds to step 475. Determining that the time-synchronous correlation is less than a threshold could indicate that the correlation between the signals is not synchronous in time. This could occur for example when an increase in one signal results in an increase in the other signal after a time delay has passed (i.e. there is a delay between the correlated behaviour). An example of this is the mean IMU sensor data (e.g. accelerometer) and heart rate signals. In this case movement (as indicated by an increase in mean IMU sensor readings) leads to an increase in heart rate after a delay (i.e. there is a delay before the heart rate increases due to the increased levels of activity).

In step 475 a time-asynchronous correlation between the two signals is determined. In this context, a time-asynchronous correlation is a measure of the correlation between two signals where one signal is permitted to be time-delayed (e.g. time-shifted) relative to the other signal. Or put in other words, when calculating a time-asynchronous correlation the requirement that time samples must be compared with samples of a same/similar time is not present. Consequently, when calculating a time-asynchronous correlation, correlations can be identified between sensors at different times.

In an example the time-asynchronous correlation is determined using a machine learning model.

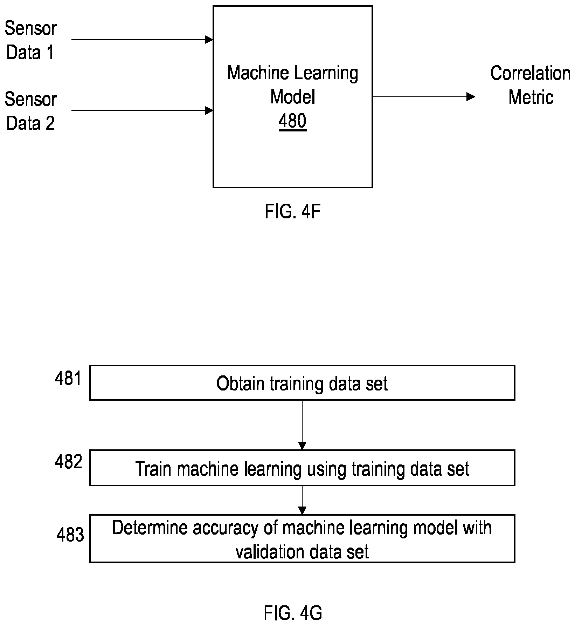

Fig. 4F shows a machine learning model according to an example. In the example of Fig. 4F the machine learning model 480 is configured to receive two inputs, for example first sensor data from a first sensor associated with a first device and second sensor data from a second sensor associated with a second device. As discussed above, as part of the pre-processing steps the first sensor data and the second sensor data may have the same dimensions and sampling rates. In an example, the first sensor data and the second sensor data are combined in a single input vector and inputted into the machine learning model 480.

In an example, the machine learning model 480 is configured to calculate and output a likelihood (i.e. a probability) that the first sensor data and the second sensor data originate from the same person. In an example the machine learning model 480 implements a sequence model (i.e. a machine learning model that accepts a sequence of data at the input). In an example the machine learning model 480 comprises a many-to-one sequence model (i.e. a machine learning model that outputs one output value after receiving many input values). In an example, the input values comprise sequences of first and second sensor data. In an example the machine learning model 480 is a Recurrent Neural Network (RNN). In a specific example the machine learning model 480 is a Long Short-Term Memory (LSTM) model.

A method of training the machine learning model 480 will now be discussed in detail. The method below is discussed in relation to an example where the machine learning model is (completely) trained as part of the correlation training phase (i.e. step 201). However, there will also be provided an example where the machine learning model is pre-trained and then fine-tuned (i.e., trained for a small amount of time) during the correlation training phase.

Fig. 4G shows a method of training the machine learning model 480 according to an example. The method begins in step 481. In step 481 a training data set is obtained. In an example the training data set comprises labelled data. In an example the training data set comprises: a sequence of sensor data from a first sensor of a first device, a sequence of sensor data from a second sensor of a second device, and a label (e.g. 1 or 0) indicating if the sensor data is collected from devices associated with the same person at the same time (i.e. while performing the same activity). In the following example, the machine learning model 480 is trained to recognise when the first sensor data and the second sensor data are associated with the same person at the same time.

In an example, the training data set comprises the sensor data obtained in steps 301 and 302 of Fig. 3, and a label indicating that the sensor data is collected from the same person. Or put in other words, in an example the training data comprises sensor data from the devices worn by the user obtained during the correlation training phase (i.e. at the same time). In an example, the training data set also comprises example data records where the sensor data is not associated with the same user at the same time.

In a further example the training data set comprises data from public datasets.

Additionally, or alternatively, the training data set may include data records comprising sensor data of the same person during the same activity and during different activities. In this way, the machine learning model 480 is trained to recognise when data originates from the same person at the same time (i.e. in the examples, devices are authenticated based on their activity at a specific time, so it can be assumed that, for example, Inertial Measurement Unit (IMU) signals of a person while sitting and Photoplethysmography (PPG) signals of the same person while running are (in effect) from different people). Advantageously, this enables the training data set to be built using sensor signals obtained from the user (only). This can improve user privacy.

In a further example, the training data set comprises artificially/synthentically generated sensor data.

After obtaining the training data set in step 481, the method proceeds to step 482. In step 482 the machine learning model 480 is trained using the training data set. In an example the machine learning model 480 is trained using Stochastic Gradient Descent (SGD) (optionally using Backpropagation). After training the machine learning model the method proceeds to step 483.

In step 483 the accuracy of the machine learning model 480 is determined with a validation data set. In an example, the validation data set comprises a similar distribution of data (e.g., a similar proportion of same person/different person sensor data) as the training data set. In step 483 the machine learning model 480 generates a prediction (i.e., whether the input sets of sensor data are associated with the same person at the same time). The validation data set also contains the ground truth data (i.e. the label indicating whether the input sets of sensor data are from the same person at the same time). In step 483, the accuracy is determined based on the prediction and the ground truth data. The method returns to Fig. 4C and proceeds to step 476.

In step 476 it is determined whether a time asynchronous correlation is present (or exists) between the sensor data being compared. Determining whether a time asynchronous correlation exists comprises determining whether the validation accuracy is greater than a predetermined threshold (e.g. a second threshold).

In an example if the validation set accuracy is less than the threshold it is determined that a correlation cannot be identified between the two types of sensor data being input to the machine learning model. During the training step (i.e. step 482) the machine learning model is trained to recognise if the input sensor data is from the same person at the same time. If after training the model the model cannot identify (with a high accuracy) that the sensor data is from the same person, then it is indicative that the correlation between the sensor data is not strong because the relationships learnt during the training step have not identified the sensor data from the same person at the same time for the validation set.

In an example the validation set accuracy is determined based on the agreement between the prediction and the ground truth data for each data record. If the validation set accuracy is greater than the threshold it is determined that a (time asynchronous) correlation does exist between the first and second sensors and that the machine learning model 480 has been trained to identify the correlation. In this case the determination in step 476 is "Yes" and the method proceeds to step 477.

In step 477 it is decided that a time asynchronous metric can be used to identify correlations between the two sources of sensor data. In step 477 the time asynchronous metric for the specific user is obtained (e.g., by obtaining the output metric from the machine learning model used in step 475 when the input is two sensor signals obtained from the same user at the same time), thereby providing a user-specific time asynchronous correlation measure. After completing step 477 the method proceeds to step 474 where the correlation data is updated to indicate that a time asynchronous correlation exists between the two sensor data types being compared. Optionally, the correlation data is also updated to include the value of the time asynchronous correlation (i.e. the likelihood/probability value) determined for the pair of sensor data. In an example, information indicating the parameters of the machine learning model that were learnt while training the machine learning model in step 475 are stored in association with the indication that a relationship exists and the correlation metric value. In an example the information indicating the parameters of the machine learning model includes the parameters itself or information indicating a location where the parameters can be obtained from.

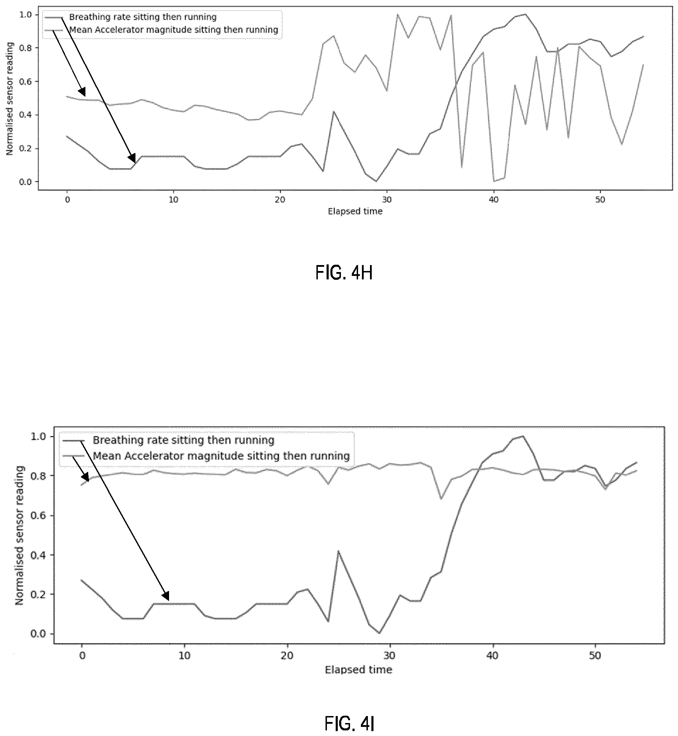

Fig. 4H shows a graphical representation of two time asynchronous correlated signals according to an example. In particular, Fig. 4H shows the breathing rate and the mean accelerometer magnitude for the same user during two activities of different intensity. As can be seen in Fig. 4H, a time asynchronous correlation can be observed where it shows the mean accelerometer readings increasing followed by a delayed increase in the breathing rate. The relationship between the breathing rate and the mean accelerometer magnitude is time asynchronous because there is a delay in the correlated behaviour.

Fig. 4I shows a graphical representation of two uncorrelated signals according to an example. In particular, Fig. 4I shows the breathing rate and the mean accelerometer magnitude for two activities of different intensity. As can be seen in Fig. 4I, a time asynchronous correlation cannot be observed because there is no change in mean accelerometer magnitude associated with the change in breathing rate.

Returning to Fig. 4C, after updating the correlation data in step 474, the method returns to Fig. 3 and proceeds to step 305.

Continuing with the method of Fig. 4C. If it is determined in step 476 that the time asynchronous is not present the method proceeds to step 478. At this point in the method of Fig. 4C it has been determined that neither of: a time synchronous correlation greater than or equal to a first threshold and a time asynchronous correlation exists. Consequently, this step of the method is performed if no significant correlation has been identified. In step 478 it is recorded that no (significant) correlation exists between the two sets of sensor data being compared.

The method proceeds to step 474 where the correlation data is updated to indicate there is no correlation between the two signals being compared. In another example, in response to determining that no correlation exists, no information is added to the correlation data (i.e. such that the correlation data only includes correlated relationships). After updating the correlation data in step 474, the method returns to Fig. 3 and proceeds to step 305.

In step 305 of Fig. 3 it is determined whether each combination of sensors from the different devices have been compared to determine a correlation. In an example, the method of Fig. 3 comprises comparing each possible combination of sensors from different devices to determine whether a correlation exists between the sensors of the devices.

In an illustrative example, the first device 102 comprises a heart-rate sensor, the second device 103 comprises a body temperature and a breathing-rate sensor, and the third device 104 comprises a heart-rate sensor. In this case there are 5 possible pairs of sensor combinations from different devices. These being: 1) first device(heart-rate) & second device(breathing-rate); 2) first device(heart-rate) & second device(body temperature); 3) first device(heart-rate) & third device(heart rate); 4) second device(breathing-rate) & third device(heart-rate); and 5) second device(body temperature) & third device(heart-rate).

In step 305 of Fig. 3 it is determined whether a correlation determination has been performed for each combination of sensors from the different devices. In the case where a pair wise correlation is used (i.e. where two signals are compared to identify a correlation) step 305 comprises determining whether a correlation has been determined for each pair of sensors from different devices.

If it is determined in step 305 that each combination of sensors from different devices has not been compared, the method proceeds to step 305 where a different (untested) combination of sensors is selected. For example, in the case where a pair wise combination is used, step 306 comprises selecting a different pair of sensors (e.g. a first sensor from a first device and a third sensor from a second device, where previous steps 303 and 304 used the first sensor from the first device and a second sensor from the second device).

If it is determined in step 305 that each combination of sensors from different devices has been compared the method proceeds to step 307. In step 307 the correlation data is outputted. In an example, outputting the correlation data comprises storing the correlation data in a memory of the first apparatus 106.

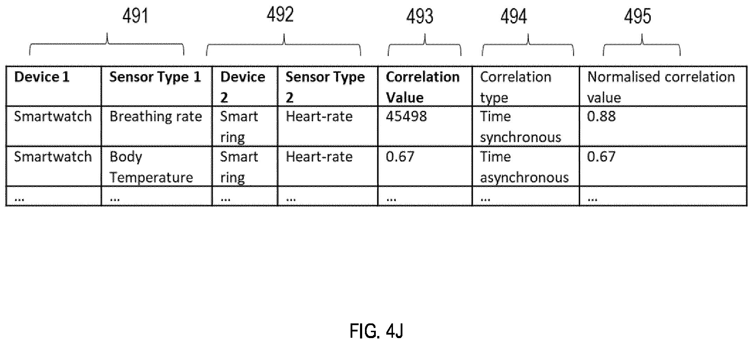

Fig. 4J shows correlation data according to an example. In Fig. 4J the correlation data is presented in tabular form (i.e. as a table). However, for the avoidance of doubt, it is emphasized that other formats for the correlation data could be used. In the illustrative example shown in Fig. 4J, the correlation data includes information identifying the first device and first sensor of a correlated pair of signals 491. The correlation data also includes information identifying the second device and the second sensor of the correlated pair of signals 492. The correlation data also includes information identifying the correlation value 493 and the correlation type 494 determined during the user-specific training stage.

For example, during the training stage it is determined that the breathing rate measured by the smartwatch is related to the heart rate measured by the smart ring by a time asynchronous correlation. The value of the time asynchronous correlation using the asynchronous correlation technique (e.g. using an RNN or LTSM) is determined to be 0.67. Similarly, Fig. 4J shows that during the training stage it is determined that the breathing rate measured by the smartwatch is related to the heart rate measured by the smart ring using a time synchronous relationship. The value of the time synchronous correlation using the time synchronous technique (e.g. Dynamic Time Warping) is determined to be 45,498.

The correlation data also includes information identifying a normalised correlation value 495. As will be discussed in more detail later, during the authentication phase the normalised correlation value is used to determine a preferred combination of sensors for authentication where a plurality of options exist.

In an example the normalised correlation value 495 is determined during the training phase by scaling the measured correlation values to have a normalised correlation value between 0 and 1 (inclusive). Advantageously, normalising correlation values enables correlations to be compared even when different correlation types/techniques are used to measure the correlation. As will be discussed in more detail later in the description, the normalised correlation values can then be used to select available sensors for authentication from different devices that have the highest correlation. Being able to identify (and subsequently selecting) sensor combinations with the highest correlation is advantageous because the sensor signals with the highest correlation represent the best opportunity to accurately identify (or determine otherwise) that the devices are being worn by the same person.

In an illustrative example the correlation metric being normalised is the Dynamic Time Warping (DTW) distance and the values of the correlation metric are 25000, 30000, 45000. As will be appreciated, when Dynamic Time Warping (DTW) is used as the correlation metric a smaller value indicates a closer similarity/correlation. Consequently, in this example the correlation metric value 25000 is associated with the largest normalised correlation value and the correlation metric value 45000 is associated with the smallest normalised correlation value (of the three metrics). In an example the correlation value is determined by dividing the correlation metric value by the largest correlation metric value and subtracting the result from 1. In an example, the normalisation is performed independently for each different correlation metric (e.g. values that use the Dynamic Time Warping distance are normalised amongst each other, values that use a time asynchronous correlation measure are normalised amongst each other etc.).

In the example of Fig. 3, step 305 comprises determining whether "each" combination of sensors has been compared. In another example, step 305 comprises determining whether a predetermined number of sensor/device combinations have been compared, where optionally the predetermined number is less than the maximum number of sensor device combinations. For example, in one implementation it may be that only 3 sensors from each device are compared during correlation training.

The description provided above describes one way of performing correlation training (i.e. step 201) according to an example. In the description above data from the sensors is collected by the first apparatus 106 (e.g. the smartphone) and the correlations are determined using the computing power of the first apparatus 106. In another example, the correlations are determined using the computing power available at one of the devices in the set of devices 101.

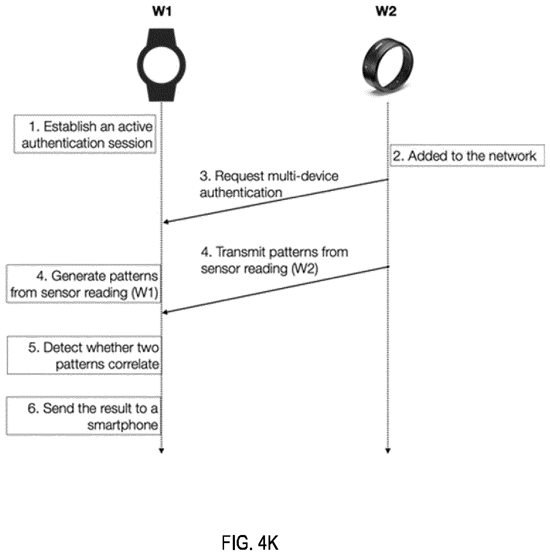

Fig. 4K shows a method of performing correlation training according to a second example. The method begins in step 1 with a first device establishing an active authentication session. The method proceeds to step 2 where a second device requests to be added to the network. The method proceeds to step 3 where the second device transmits a request to the first device for multi-device authentication. The method proceeds to step 4 part 1 where data from the sensors of the first device is obtained. The method proceeds to step 4 part 2 where data from the sensors of the second device is obtained (e.g. by the second device transmitting the data to the first device). The method proceeds to step 5 where the first device determines whether there is a correlation between the two sets of sensor data. In an example, the first device determines whether a correlation exists using the method of Fig. 4C. Optionally, before determining whether a correlation exists the data from the sensors is pre-processed using the method of Fig. 4B. After detecting whether the data from sensors of the devices correlate the method proceeds to step 6. In step 6 the results of the correlation detection are transmitted to the first apparatus 106 (e.g. the smartphone). In an example, the first apparatus 106 uses this information to generate the correlation data as described in relation to Fig. 4J.

Returning to the method of Fig. 2. After performing correlation training in step 201 the method proceeds to step 202. In step 202 devices are authenticated by the first apparatus 106. As will be apparent from the description below, in step 202 devices are authenticated using the (current) sensor data measured by the devices and based on the (historical) relationships/correlations between the sensor data determined during the correlation training phase of step 201.

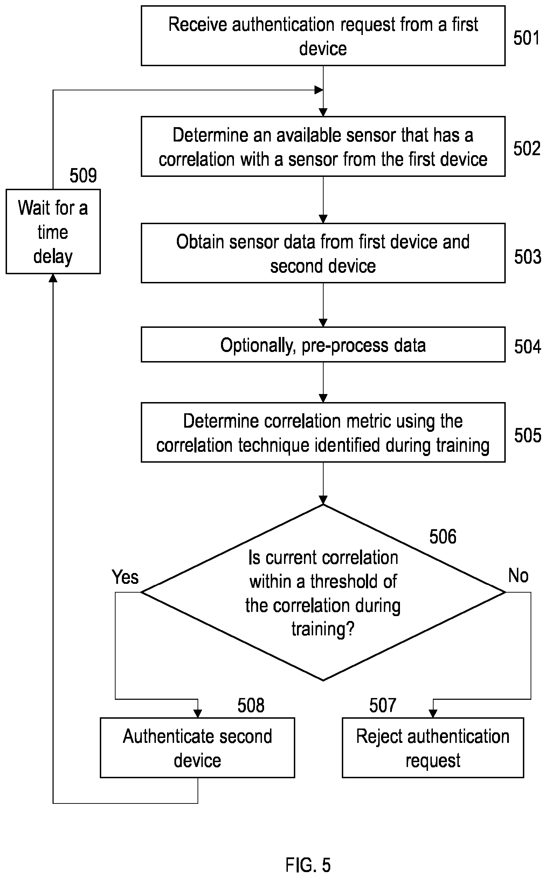

Fig. 5 shows a method of authenticating a device according to an example. In an example the method of Fig. 5 is performed by the first apparatus 106, which is responsible for providing/granting access to the service/network. In the illustrative example, the second device 103 has already been authenticated to the service/network.

The method begins in step 501. In step 501 an authentication request is received from the first device 102. In an example, the authentication request includes information identifying the sensors available at the first device 103 for use during the authentication procedure. In an example, the sensors available for authentication are sensors that are currently active and recording/measuring data. The method proceeds to step 502.

In step 502 a correlated sensor from a second device is selected. The method of Fig. 5 will be discussed in relation to an example where the second device is already authenticated (i.e., has already been granted access to the resource and service so it is known that the second device is associated with the user), however in other examples the second device may not be authenticated and may only be known to be associated with the user.

In an example step 502 comprises determining a sensor from another device (i.e. not the first device 102) that is correlated with an available sensor of the device requesting authentication. In an example, step 502 comprises determining a sensor from an already authenticated device that correlates the most (i.e. has the highest normalised correlation value) with a sensor at the first device 102 (from which the authentication request was received from in step 501).

In an illustrative example, the second device 103 (already-authenticated) is a smart watch and the first device 102 is a smart ring. As previously discussed, the smart ring includes a heart rate sensor and the smart watch includes a breathing rate sensor and a body temperature sensor.

In step 502, it is determined which sensor combination from the authenticating device and the already-authenticated device have the highest correlation. In an illustrative example, in step 502 it is determined which sensor combination from the first device 102 (e.g. the smart ring) has the highest correlation (i.e. the highest normalised correlation value) with a sensor from another already-authenticated device. For example, in step 502 it is determined which has the higher correlation of: 1) first device (heart rate) & second device (body temperature); or 2) first device (heart rate) & second device (breathing rate). In an example, the highest correlation is determined using the normalised correlation value 495 recorded in the correlation data (obtained from the correlation training phase). As will be appreciated, selecting the combination of sensors that have the highest correlation is preferred because it increases authentication accuracy.

After selecting an available sensor from an already authenticated device in step 502, the method proceeds to step 503. In step 503 sensor data from the first device and second device is obtained. The sensor data is obtained for the same period of time (i.e. the sensor data has approximately the same start time and end time). In an example, obtaining sensor data from the first device and the second device comprises transmitting a request from the first apparatus (managing the authentication process) to the first device 102 and the second device 103, and receiving one or more responses from each of the first device 102 and the second device 103 comprising the sensor data. After obtaining the sensor data from the first device 102 and the second device 103, the method proceeds to step 504.

In step 504, the sensor data obtained in step 503 is pre-processed. In an example, the sensor data is pre-processed using the same techniques as were discussed in relation to step 303 of Fig. 3 (e.g. resampling and/or dimensionality reduction) such that the sensor data received from the different devices is the same dimension and the same sampling rate. Step 504 is an optional step in the sense that step 504 may be omitted in some examples where the data from the first device 102 and the second device 103 is already suitable for correlation calculation. After pre-processing the sensor data, the method proceeds to step 505.

In step 505 a (current) correlation value between the sensor data is determined. In an example, step 505 comprises determining a correlation value between measurements from a sensor of the first device 102 and measurements from a sensor of the second device 103. In an example, determining the correlation value comprises identifying, from the correlation data (obtained during the correlation training phase), a correlation type for calculating a correlation (e.g. time synchronous; or time asynchronous). After determining the correlation type, the correlation metric is calculated between the sensor measurements according to the correlation type (e.g. if it was observed during correlation training that a time synchronous correlation exists between data from the selected sensors, the time synchronous correlation is used to determine the correlation metric). In the case of a time asynchronous correlation, the time asynchronous correlation is determined used the machine learning model generated during the training phase to identify whether the two input sensor data types are from the same person at the same time. After completing step 505 a value for the correlation between a sensor measurement from the first device 102 and a sensor measurement from the second device 103 is obtained. The method proceeds to step 506.

Step 506 comprises determining whether the (current) value of the correlation metric (determined in step 505) is within a threshold of the (historical) value of the correlation determined during correlation training (i.e. when it was explicitly confirmed that each of the devices were being worn by the same user).

In an example, the (historical) correlation is obtained from the correlation data. In an example, the (current) value of the correlation metric is within a threshold of the correlation determined during correlating training when the current correlation metric value is: 1) greater than or equal to the training correlation less the threshold; and 2) less than or equal to the training correlation plus the threshold (i.e. *training correlation* - *threshold* < *correlation* ≤ *training correlation* + *threshold*)*.*

In a further example, where a time asynchronous correlation metric is used it may be determined whether the (current) value of the correlation metric is above a predetermined threshold (i.e. a predetermined threshold).

If it is determined in step 506 that the current correlation is not within the threshold of the metric obtained from correlation training then the method proceeds to step 507. In step 507 the authentication request is rejected. In an example, rejecting the authentication request comprises not allowing the first device 102 to join the network/service which the first device 102 has requested access to. In an example rejecting the authentication request comprises transmitting (by the first apparatus 106) a communication to the first device 102 informing the first device 102 that the authentication request is not successful.

If it is determined in step 506 that the measured correlation is within the threshold of the correlation metric obtained in correlation training, then the method proceeds to step 508. In step 508 the authentication request is accepted. In an example accepting the authentication request comprises enabling the first device 102 to access/join the network/service that is managed by the first apparatus 106. In an example, after being granted access to the network/service the first device 102 accesses the network/service.

In one example, after performing steps 507 or 508, the method terminates.

In another example the method performs continuous authentication. In this example, the steps of Fig. 5 are continuously performed so that it is checked at different times whether the sensor data from the first device 102 is still correlated with sensor data from an already authenticated device (e.g., the second device 103). Advantageously, repeatedly performing the authentication method ensures that the wearable device has access to the network/service only when it is being worn by the user. For example, in the case that the first device 102 (which has previously been authenticated) is taken by another user, it can be determined that the first device 102 is no longer being worn by the same user and therefore should not have access to the network/service. In this further example, after authenticating the first device 102 in step 508, the method proceeds to step 509.

In step 509 the method waits for a time delay to complete. In an example, the time delay is predetermined. After the time delay has completed the method proceeds to step 502. In step 502 an available sensor from an already authenticated device is selected to determine whether a correlation exists with a sensor available at the first device 102. In an example, step 502 is performed again completely. In this case, the sensors of all of the active authenticated devices are evaluated to determine a preferred correlation pair. Advantageously, by re-evaluating the sensors from available authenticated devices a more accurate correlation determination can be made (e.g. if the previously used device runs out of battery, a new device can be selected for correlation; or if a new device has authenticated that includes a sensor with a higher correlation score to the sensors of the first device). After repeating step 502 the method continues until reaching step 508 upon successful authentication checks. As will be appreciated, after the first iteration step 508 comprises maintaining the authenticated status of the first device 102.

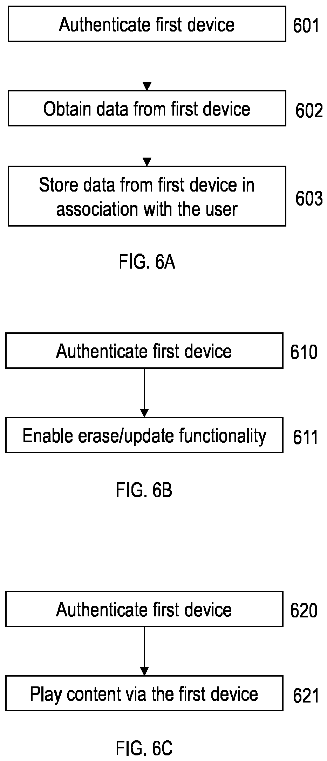

Fig. 6A shows a first use of the authentication method according to an example. The method of Fig. 6A is performed by the first apparatus 106 after completing correlation training (e.g. according to steps 201 in Fig. 2). In step 601 a first device 102 is authenticated. For example, using the method discussed in relation to step 202 of Fig. 2 and Fig. 5. As discussed above, in an example the first device 102 is authenticated by identifying a correlation between the sensors active at the first device 102 and the sensors active at an already authenticated device (e.g. the second device 103). After authenticating the first device 102, the method proceeds to step 602. In step 602 the first apparatus 106 obtains data (e.g. sensor data) from the first device 102. For example, the first apparatus 106 obtains data measured/observed by the first device (e.g. the first user's heart rate when the first device 102 is implemented as a smart ring). In an example, obtaining (sensor) data from the first device 102 comprises transmitting a request for data from the first apparatus 106 to the first device 102 and receiving a response from the first device 102 comprising the data. After obtaining the data the method proceeds to step 603. In step the data from the first device 102 is stored in association with the first user. Advantageously, using the method of Fig. 6A ensures that data is only recorded in association with the first user if it has already been determined (based on the measured sensor data) that the devices are being worn by the same user (e.g. the first user). This prevents data being recorded in error in connection with the wrong user.

Fig. 6B shows a second use of the authentication method according to an example. The method of Fig. 6B is performed by the first apparatus 106 after completing correlation training (e.g. according to steps 201 in Fig. 2). In step 610 a first device 102 is authenticated. For example, using the method discussed in relation to step 202 of Fig. 2 and Fig. 5. After authenticating the first device 102, the method proceeds to step 611. In step 611 erase/update functionality is enabled at the first device 102. For example, the first apparatus 106 communicates to the first device 102 that erase/update functionality is permitted. By using the authentication method described herein it is possible to ensure that a device functionality/data (e.g. the functionality of the first device 102 or the data stored by the first device 102) can only be erased/updated if the device is being worn by the correct user, thereby preventing unauthorised users from erase/updating the devices.

Fig. 6C shows a third use of the authentication method according to an example. The method of Fig. 6C is performed by the first apparatus 106 after completing correlation training (e.g. according to steps 201 in Fig. 2 and Fig. 3). In step 620 a first device 102 is authenticated. For example, using the method discussed in relation to step 202 of Fig. 2 and Fig. 5. After authenticating the first device 102, the method proceeds to step 621. In step 621 the first apparatus 106 causes content (e.g. audio data, video data etc.) to be played via the first device 102 (which was authenticated in step 620). By using the authentication method described herein it is possible to ensure that content is only played through the device if the device is worn by the correct user. For example, using the methods described herein content (e.g. audio) will only be played via the first device if the device is worn by the same user (e.g. the first user), thereby preventing a user from consuming the content if they are not authorised.

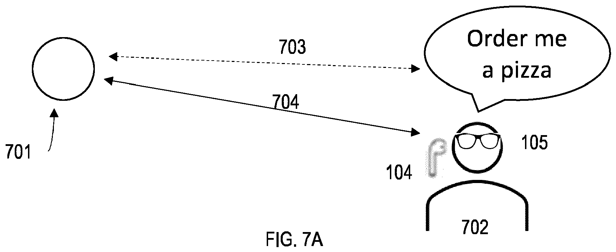

Fig. 7A shows an exemplary system for a fourth use of the authentication method according to an example. In particular Fig. 7A shows a system comprising a digital assistant 701 (e.g. an Amazon Alexa^{™} or a Google Home^{™}). The digital assistant 701 is configured to listen for voice commands from a user 702, process the voice commands (e.g. using natural language processing), and act on the voice commands (e.g. by playing some content requested by a user or answering a question requested by the user 702). The user 702 is associated with a plurality of devices including the third device 104 (implemented using a pair of smart earbuds) and the fourth device 105 (implemented using a pair of smart glasses).

In the example of Fig. 7A the user 702 speaks a command. For example: "Order me a pizza". The user 702 is located a distance away from the digital assistant 701. As will be apparent from the description below, there are two measurements of this distance. A first distance 703 measured based on audio information received by the digital assistant 701 and a second distance 704 measured based on range information (e.g. Bluetooth^{™} range information) to one of the plurality of devices associated with the user 702 (e.g. worn by the user).

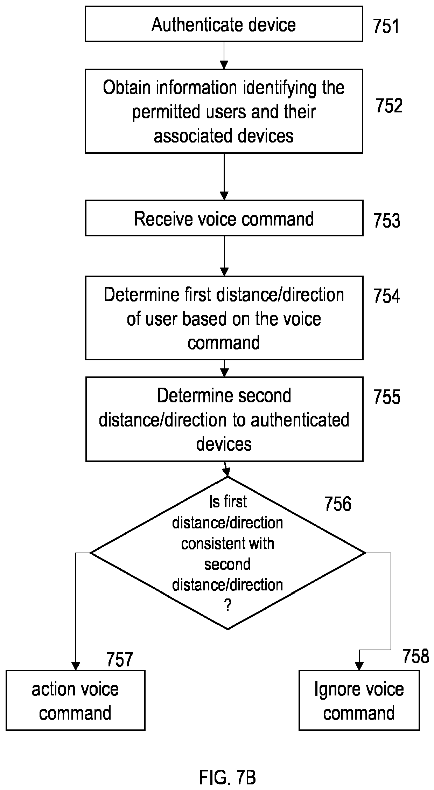

Fig. 7B shows the fourth use of the authentication method according to an example. The method of Fig. 7B is performed by the digital assistant 701. In step 751 the third device 104 is authenticated. For example, using the method discussed in relation to step 202 of Fig. 2 and Fig. 5. After authenticating the third device 104, the method proceeds to step 752.

In step 752 the digital assistant 701 obtains information identifying the users who are permitted to access the functionality of the digital assistant 701 and the authenticated devices associated with those users (e.g. as identified using MAC addresses). For example, it may be configured that only adults in the family are able to access the functionality of the digital assistant 701.

The method proceeds to step 753. In step 753 the digital assistant 701 receives a voice command (e.g. "Order me a pizza"). The method proceeds to step 754. In step 754 the digital assistant 701 determines the first distance 703 to the user based on the audio information received by the digital assistant 701. Optionally the digital assistant 701 also determines the direction to the user 702. The method proceeds to step 755. In step 755 the digital assistant 701 determines the second distance 704 to the authenticated devices of the permitted users (e.g. to the third device 104 and the fourth device 105) using communication range measurements (e.g. using Bluetooth^{™} range information). Optionally the digital assistant 701 also determines the direction to the devices of the permitted users. The method proceeds to step 756.

In step 756 the digital assistant 701 determines whether the first distance 703 (and optionally first direction) is consistent with the second distance 704 (and optionally second direction). In an example the first and second distances/angles are consistent if the differences in the measurements are less than a predetermined threshold. If it is determined that the first distance/direction is consistent with the second distance/direction then the method proceeds to step 757 where the voice command received in step 753 is actioned. If, on the other hand, it is determined in step 756 that the first distance/direction is not consistent with the second distance/direction then the method proceeds to step 758 where the voice command is ignored.

Using the authentication methods described herein enable the second distance/direction 704 to be associated with user since the devices would not have been authenticated (and so would not be included in the information obtained in step 752) unless they were being worn by the user. This enables the digital assistant 701 to determine the distance to permitted users and use this information to determine whether the received audio command was received from a permitted user.

In the example of Fig. 1 the first apparatus 106 is not included in the first set of sensors 101. However, in other examples the first apparatus 106 comprises a sensor and is included in the first set of sensors 101.

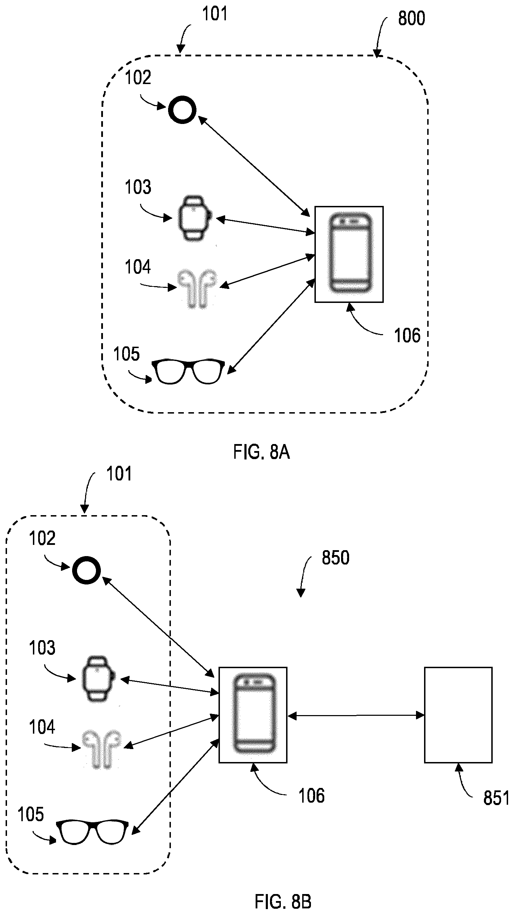

Fig. 8A shows a second system 800 according to an example. Fig. 8A uses same reference numbers as Fig. 1 to denote same components. As a result, a detailed discussion will be omitted. In the example of Fig. 8A the first apparatus 106 comprises a sensor. Consequently, the first apparatus 106 is included in the first set of sensors 101. In this case, during correlation training (i.e. step 201 of Fig. 2) and during authentication (i.e. step 202 of Fig. 2), the sensor(s) of the first apparatus 106 are accessed and can be used for authenticating other devices in the first set of sensors 101.

In the examples above the computations required during correlation training (i.e. step 201) to determine correlations between sensors are performed by the first apparatus 106.

However, in other examples computation is offloaded from the first apparatus 106 to a server. In an example the server is a cloud server.

Fig. 8B shows a third system 850 according to an example. Fig. 8B uses same reference numbers as Fig. 1 to denote same components. As a result, a detailed discussion will be omitted. In the example of Fig. 8B, the first apparatus 106 is communicatively coupled with a server 851. In the example of Fig. 8B during correlation training (i.e. during step 201) the method of Fig. 4C (and optionally 4B) is performed by the server 851.

In the examples above the machine learning model for determining the time asynchronous correlation is trained locally during the correlation training phase. In other examples, the machine learning models to determine if device/sensor combinations are associated with the same person are pretrained at a remote entity (e.g. on a server) using a data set (e.g. comprising one or more of: public data and/or synthetically generated data). During the correlation training phase the pre-trained model is obtained by the first apparatus, which then performs fine-tuning (i.e. further training for a time period) on the pre-trained model using data from the specific user.

In the methods described above a direct comparison is made between at least two different sensor modes (i.e. two different characteristics) for the purpose of determining whether the devices are associated with the same person. In this way, there is no requirement that the devices sense a common mode (i.e. a common characteristic) in order to be authenticated. Advantageously, this enables more devices with different measuring capabilities to be used.

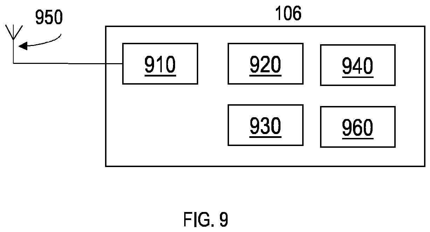

Fig. 9 shows an implementation of the first apparatus 106 according to an example. The first apparatus 106 comprises an input/output module 910, a processor 920, a non-volatile memory 930 and a volatile memory 940 (e.g. a RAM). The input/output module 910 is communicatively connected to an antenna 950. The antenna 950 is configured to receive wireless signals from, and transmit wireless signals to the devices in the set of devices 101. The processor 920 is coupled to the input/output module 910, the non-volatile memory 930 and the volatile memory 940.

The non-volatile memory 930 stores computer program instructions that, when executed by the processor 920, cause the processor 920 to execute program steps that implement the functionality of a first apparatus 106 as described in the above-methods. In an example, the computer program instructions are transferred from the non-volatile memory 930 to the volatile memory 940 prior to being executed. Optionally, the first apparatus also comprises a display 960.

In an example, the non-transitory memory (e.g. the non-volatile memory 930 and/or the volatile memory 940) comprises computer program instructions that, when executed, perform the methods described above.

Whilst in the example described above the antenna 950 is shown to be situated outside of, but connected to, the first apparatus 106 it will be appreciated that in other examples the antenna 950 forms part of the apparatus 106.

In an example a device (e.g. the first device 102) from the first set of devices 101 comprises the same components (e.g. an input/output module 910, a processor 920, a non-volatile memory 930 and a volatile memory 940 (e.g. a RAM)) as the first apparatus 106. In this example, the non-volatile memory 930 stores computer program instructions that, when executed by the processor 920, cause the processor 920 to execute program steps that implement the functionality of a first device 102 as described in the above-methods.

The term "non-transitory" as used herein, is a limitation of the medium itself (i.e., tangible, not a signal) as opposed to a limitation on data storage persistency (e.g., RAM vs. ROM).

As used herein, "at least one of the following: <a list of two or more elements>" and "at least one of: <a list of two or more elements>" and similar wording, where the list of two or more elements are joined by "and" or "or", mean at least any one of the elements, or at least any two or more of the elements, or at least all the elements.

While certain arrangements have been described, the arrangements have been presented by way of example only and are not intended to limit the scope of protection. The concepts described herein may be implemented in a variety of other forms. In addition, various omissions, substitutions and changes to the specific implementations described herein may be made without departing from the scope of protection defined in the following claims.

## Claims

1. Apparatus comprising means for:
receiving a request to authenticate a first device;
obtaining information identifying a first set of sensors associated with the first device;
obtaining information identifying a second set of sensors associated with a second device;
obtaining correlation data indicating correlations between sensors in the first set of sensors and sensors in the second set of sensors;
selecting a first sensor from the first set of sensors and a second sensor from the second set of sensors based on the correlation data; and
authenticating the first device in response to determining that data from the first sensor is correlated with data from the second sensor.

2. The apparatus according to claim 1, further comprising means for:
generating correlation data by learning correlations between the first set of sensors and the second set of sensors.

3. The apparatus according to claim 2, wherein learning correlations between the first set of sensors and the second set of sensors comprises:
receiving first data for a first time period from the first sensor;
receiving second data for the first time period from the second sensor;
determining a correlation between the first sensor and the second sensor based on the first data and the second data.

4. The apparatus according to claim 3, wherein determining the correlation between the first sensor and the second sensor based on the first sensor data and the second sensor data comprises:
determining a value of a time synchronous correlation metric between the first sensor data and the second sensor data; and
determining that a time synchronous correlation exists between the first sensor and the second sensor in response to determining that the value of the time synchronous correlation metric is greater than a first threshold.

5. The apparatus according to claim 4, wherein determining the correlation between the first sensor and the second sensor based on the first sensor data and the second sensor data further comprises:
in response to determining that the value of the time synchronous correlation metric is less than the first threshold:
determining a value of a time asynchronous correlation metric between the first sensor data and the second sensor data.

6. The apparatus according to claim 5, wherein determining the value of the time asynchronous correlation metric between the first sensor data and the second sensor data comprises:
training a machine learning model to predict if at least two input data samples from a training data set are associated with the same user at the same time;
determining an accuracy of the machine learning model based on a validation data set; and
in response to determining that the accuracy of the machine learning model is greater than a second threshold:
determining the value of the time asynchronous correlation metric using the machine learning model, the first sensor data and the second sensor data.

7. The apparatus according to claim 6, wherein the machine learning model is configured to generate an output indicating a likelihood that the at least two input data samples are associated with the same person at the same time; and wherein the time asynchronous correlation metric corresponds to the likelihood.

8. The apparatus according to any of claims 4 to 7, wherein the time synchronous correlation metric comprises a dynamic time warping metric.

9. The apparatus according to any preceding claim, wherein the first sensor and the second sensor measure different characteristics.

10. The apparatus according to any preceding claim, wherein the request to authenticate the first device comprises the information identifying the first set of sensors associated with the first device.

11. The apparatus according to any preceding claim, wherein selecting the first sensor from the first set of sensors and the second sensor from the second set of sensors comprises:
identifying a combination of sensors from the first set of sensors and the second set of sensors that are associated with a highest correlation metric value in the correlation data.

12. The apparatus according to any preceding claim, wherein the second device is already authenticated.

13. The apparatus according to any preceding claim, wherein the correlation data comprises information indicating a type of correlation between the first sensor and the second sensor, and a first value of the correlation metric between the first sensor and the second sensor; and wherein determining that the data from the first sensor is correlated with data from the second sensor comprises:
identifying the type of correlation between the first sensor and the second sensor;
calculating a second value of the correlation metric between the first sensor and the second sensor based on the type of correlation; and
determining that the data from the first sensor is correlation with data from the second sensor in response to determining that the second value of the correlation metric is within a third threshold of the first value of the correlation metric.

14. A method comprising:
receiving a request to authenticate a first device;
obtaining information identifying a first set of sensors associated with the first device;
obtaining information identifying a second set of sensors associated with a second device;
obtaining correlation data indicating correlations between sensors in the first set of sensors and sensors in the second set of sensors;
selecting a first sensor from the first set of sensors and a second sensor from the second set of sensors based on the correlation data; and
authenticating the first device in response to determining that data from the first sensor is correlated with data from the second sensor.

15. A computer program comprising instructions which, when executed by an apparatus, cause the apparatus to perform at least the following:
receiving a request to authenticate a first device;
obtaining information identifying a first set of sensors associated with the first device;
obtaining information identifying a second set of sensors associated with a second device;
obtaining correlation data indicating correlations between sensors in the first set of sensors and sensors in the second set of sensors;
selecting a first sensor from the first set of sensors and a second sensor from the second set of sensors based on the correlation data; and
authenticating the first device in response to determining that data from the first sensor is correlated with data from the second sensor.
